# EUROPÄISCHE PATENTSCHRIFT

(11) **EP 3 819 981 B1**
(45) Veröffentlichungstag und Bekanntmachung des Hinweises auf die Patenterteilung: **22.01.2025**
(21) Anmeldenummer: 20195695.0
(22) Anmeldetag: 11.09.2020
(51) Int. Cl.: H01M 50/503, H01M 50/514, H01M 50/552, H01R 4/38

(54) **MODULVERBINDER SOWIE VERFAHREN ZUR VERBINDUNG VON MODULEN**
MODULE CONNECTOR AND METHOD FOR CONNECTING MODULES
RACCORD DE MODULE AINSI QUE PROCÉDÉ DE RACCORDEMENT DE MODULES

(30) Priorität: 05.11.2019 DE 102019129805
(43) Veröffentlichungstag der Anmeldung: 12.05.2021
(73) Patentinhaber: Auto-Kabel Management GmbH, 79688 Hausen i.W. (DE)
(72) Erfinder: SCHARKOWSKI, Oliver, 03046 Cottbus (DE)
(74) Vertreter: Cohausz & Florack

(56) Entgegenhaltungen:
- EP-A1- 2 871 695
- EP-A1- 2 882 011
- DE-A1- 102016 109 882
- JP-A- 2003 092 101
- KR-A- 20180 072 221
- US-A1- 2018 175 432

## Beschreibung

Der Gegenstand betrifft einen Modulverbinder, insbesondere einen Batteriezellenverbinder sowie ein Verfahren zur Verbindung von Modulen. Ein gegenständlicher Modulverbinder kann als Baugruppe gebildet sein und kann zum elektrisch leitenden Verbinden eines ersten Moduls einer ersten elektrochemischen (Batterie-)Zelle einer elektrochemischen Vorrichtung mit einem zweiten Modul einer zweiten elektrochemischen (Batterie-)Zelle der elektrochemischen Vorrichtung eingerichtet sein. Eine elektrochemische Vorrichtung ist insbesondere eine Batterie, bevorzugt eine Kraftfahrzeugbatterie. Eine solche Batterie kann beispielsweise eine Batterie eines Antriebstrangs eines Kraftfahrzeugs sein.

In rein batteriebetriebenen elektrischen Fahrzeugen (BEV) als auch in Plug-in-Hybrid elektrischen Fahrzeugen (PHEV), insbesondere Automobilen, Zweirädern, Schiffen, Luftschiffen und dergleichen, kommen vermehrt Batterien zum Einsatz, bei denen eine Vielzahl an elektrochemischen Zellen miteinander in Reihe und/oder parallel zueinander geschaltet werden. Jede einzelne Zelle weist eine an und für sich geringe Speicherkapazität als auch eine geringe Zellspannung, beispielsweise von 4,8 V auf. Durch das Zusammenschalten mehrerer Zellen können aber hohe Batteriekapazitäten bei gleichzeitig hohen Spannungen realisiert werden. Batteriezellen können beispielsweise Lithium-Ionen-Batteriezellen sein.

Aufgrund der hohen Stromflüsse in Fahrzeugen, beispielsweise bei der Verwendung von Batterien als Energiespeicher für den Antriebsstrang, ist es notwendig, die Batteriezellen untereinander mit geringen Übergangswiderständen zu verbinden. Hierzu eignen sich insbesondere sogenannte Batteriezellenverbinder.

Aus dem Stand der Technik sind Steck-Batteriezellenverbinder und Schraub-Batteriezellenverbinder bekannt, wie z.B. aus der EP 2 882 011 A1 oder der JP2003092101A. Die aus dem Stand der Technik bekannten Steck-Batteriezellenverbinder weisen allerdings nur eine begrenzte Stromtragfähigkeit auf, wohingegen bei Verwendung der aus dem Stand der Technik bekannten Schraub-Batteriezellenverbinder für Montage und Demontage Zusatzwerkzeuge benötigt werden. Da bei Montage und Demontage verwendete Zusatzwerkzeuge häufig bestimmte Hochvolt-Eigenschaften aufweisen müssen, ist die Nutzung solcher Zusatzwerkzeuge kostenintensiv.

Demnach lag dem Gegenstand die Aufgabe zugrunde, einen Modulverbinder sowie ein Verfahren zur Verbindung von Modulen anzugeben, welche ohne Zusatzwerkzeuge montiert und/oder demontiert werden können, eine hohe Stromtragfähigkeit aufweisen sowie wirtschaftlich herstellbar sind.

Diese Aufgabe wird durch einen Modulverbinder nach Anspruch 1 sowie durch ein Verfahren nach Anspruch 11 gelöst.

Die Kontaktbuchse kann dabei entweder mit dem Gehäuseteil oder mit einem in dem Gehäuseteil angeordneten Modul und/oder einer in dem Gehäuseteil angeordneten (Batterie-)Zelle verbunden sein. Es ist bevorzugt, dass die Kontaktkräfte im Wesentlichen quer zu der Kontaktbuchse, insbesondere im Wesentlichen quer zu den Kontaktlamellen der Kontaktbuchse, wirken, wodurch die Gefahr einer Beschädigung der Kontaktbuchse verringert werden kann.

Insbesondere bietet ein solcher Modulverbinder durch seine geometrische Auslegung, ausreichend große Kontaktflächen zwischen der Kontaktbuchse und dem Kontaktbolzen, so dass die auf die Kontaktlamellen wirkenden Kontaktkräfte ausreichend hoch und im Wesentlichen gleichbleibend ausgelegt werden können. Hierdurch kann eine ausreichende Stromtragfähigkeit ohne die Verwendung von Werkzeug von einem Modulverbinder zur Verfügung gestellt werden. Des Weiteren ist es bevorzugt, dass die Kontaktkräfte, beispielsweise durch weitere Verschraubung, nachreguliert werden können.

Die Kontaktbuchse wird bevorzugt mittels eines Stanzprozess aus einem Blechband hergestellt, wobei die Kontaktlammelen nach dem Stanzprozess in einem Winkel von im Wesentlichen 70° bis 90°, insbesondere in einem Winkel von 75° bis 85°, zum Kontaktteller umgeformt werden.

Bevorzugt ist das Gehäuseteil aus einem funktionserfüllenden Grundwerkstoff gebildet, insbesondere aus Kunststoff. Es ist allerdings ebenfalls möglich, dass das Gehäuseteil Teile aus Metall oder einen Metallüberzug aufweist.

Erfindungsgemäß wird vorgeschlagen, dass das Gehäuseteil zumindest einen, die Kontaktbuchse im Wesentlichen zylinderförmig umgebenden Vorsprung aufweist. Ein solcher Vorsprung kann zum einen als Montagehilfe für das Anschlussteil oder ein Verbindungsteil dienen, andererseits bietet ein die Kontaktbuchse zylinderförmig umgebender Vorsprung ebenfalls eine gesteigerte Montagesicherheit, da der Vorsprung ein unbeabsichtigtes Kontaktieren der Kontaktbuchse verhindern kann.

Erfindungsgemäß wird vorgeschlagen, dass der Modulverbinder ein Verbindungsteil umfasst, welches einen außenseitigen, zylinderförmigen Bereich und einen innenseitigen, zylinderförmigen Bereich aufweist, und welches mit dem Vorsprung verbindbar ist, und dass der innenseitige, zylinderförmige Bereich und/oder die innere Mantelfläche des Vorsprungs derart ausgebildet sind, dass eine Verbindung des Verbindungsteils mit dem Vorsprung zu einer Raumverengung innerhalb des Vorsprungs führt. Es ist bevorzugt, dass sich der Raum innerhalb des Vorsprungs mit zunehmender Verbindung des Verbindungsteils mit dem Vorsprung zunehmend verengt. Hierbei ist bevorzugt, dass insbesondere eine Raumverengung in Querrichtung zu den Kontaktlamellen der Kontaktbuchse innerhalb des Vorsprungs stattfindet. Hierdurch können in Abhängigkeit der Verbindung die auf die Kontaktlamellen wirkenden Kontaktkräfte vergrößert werden. Insbesondere kann hierdurch ein Nachjustieren der Kontaktkräfte auf die Kontaktlamellen wirkenden Kontaktkräfte durch eine zunehmende Verbindung ermöglicht werden.

Erfindungsgemäß wird vorgeschlagen, dass sich die Wandstärke des innenseitigen, zylinderförmigen Bereichs in Richtung des Gehäuseteils verjüngt und/oder dass sich die Wandstärke des Vorsprungs in Richtung des Verbindungsteils verjüngt. Hierdurch kann bei einer Verbindung des Verbindungsteils mit dem Gehäuseteil eine Keilwirkung erreicht werden, wodurch Kontaktkräfte in Form einer Flächenpressung auf die Kontaktlamellen ausgeübt werden können und der Kontaktübergangswiderstand minimiert werden kann.

Gemäß einem Ausführungsbeispiel wird vorgeschlagen, dass das Verbindungsteil einstückig mit dem Anschlussteil gebildet ist oder dass das Verbindungsteil mittels einer Rastverbindung mit dem Anschlussteil verbindbar ist. Neben einer Rastverbindung sind auch weitere Verbindungsarten zur Verbindung des Verbindungsteils mit dem Anschlussteil denkbar, wie beispielsweise eine Schraub- und/oder eine Klemmverbindung. Es ist bevorzugt, dass die Rastverbindung zwischen Anschlussteil und Verbindungsteils werkzeuglos herstellbar ist. Des Weiteren ist es in einem solchen Fall bevorzugt, dass das Verbindungsteil bereits auf dem Gehäuseteil vormontiert ist. Hierdurch wird die Montagesicherheit verbessert, da ein unbeabsichtigtes Berühren der Kontaktbuchse verhindert werden kann.

Gemäß einem Ausführungsbeispiel wird vorgeschlagen, dass der Vorsprung an seiner Mantelfläche ein Gewinde aufweist und dass das Verbindungsteil mit dem Vorsprung verschraubbar ist. Bevorzugt ist das Gewinde als Außengewinde gebildet und an der äußeren Mantelfläche des Vorsprungs angeordnet. Des Weiteren ist es bevorzugt, dass an der inneren Mantelfläche des außenseitigen, zylinderförmigen Bereichs ein zu dem Gewinde des Vorsprungs korrespondierendes Innengewinde gebildet ist. Es ist bevorzugt, dass die beiden zylinderförmigen Bereiche mittels eines an der Stirnseite des Verbindungsteils angeordneten, ringförmigen Stegs miteinander verbunden sind. Das Verbindungsteil kann aus einem metallischen Werkstoff oder aus Kunststoff gebildet sein. Die Mantelfläche, an der das Gewinde angeordnet ist, kann mit einem metallischen Werkstoff kaschiert oder beschichtet sein, so dass das Gewinde metallisch ist.

Gemäß einem Ausführungsbeispiel wird vorgeschlagen, dass eine zunehmende Verschraubung des Verbindungsteils mit dem Vorsprung zu einer zunehmenden Raumverengung in Querrichtung zu den Kontaktlamellen der Kontaktbuchse innerhalb des Vorsprungs führt und dass mit zunehmender Verschraubung zunehmende Kontaktkräfte auf die äußere Mantelfläche der Kontaktlamellen wirken. Bei einer Verschraubung können hohe Drehmomente erreicht werden, so dass ein Lösen von Gehäuse- und Anschlussteil zuverlässig vermieden werden kann. Es ist ebenfalls möglich, das Verbindungsteil und das Gehäuseteil nicht mittels eines Gewindes, sondern mittels einer anderen Verbindungsmöglichkeit miteinander zu verbinden. Hierzu kommen beispielsweise Rast- und/oder Klemmverbindungen in Frage.

Gemäß einem Ausführungsbeispiel wird vorgeschlagen, dass das Verbindungsteil mittels einer Rastverbindung mit dem Vorsprung verbindbar ist, dass der innenseitige, zylinderförmige Bereich des Verbindungsteils zur Herstellung der Rastverbindung als federndes Elements gebildet ist und dass das federnde Element bei Herstellung der Rastverbindung Kontaktkräfte auf die äußere Mantelfläche der Kontaktlamellen ausübt. Es ist bevorzugt, dass das federnde Element als Federkranz gebildet ist und/oder dass das federnde Element vorzugsweise aus Metall und/oder aus Kunststoff gebildet ist. Beim Ineinanderstecken von Verbindungsteil und Anschlussteil werden mittels der Kontaktkräfte die Kontaktlamellen der Kontaktbuchse an den Kontaktbolzen gedrückt, wodurch Kontaktbuchse und Kontaktbolzen form- und kraftschlüssig miteinander verbunden werden. Des Weiteren ist es bevorzugt, dass das federnde Element einen im Wesentlichen U-förmigen Querschnitt aufweist.

Gemäß einem Ausführungsbeispiel wird vorgeschlagen, dass der Kontaktbolzen und/oder die Kontaktbuchse einen elektrisch leitenden Grundwerkstoff, insbesondere Kupfer, umfasst und dass der Grundwerkstoff zumindest teilweise von einem weiteren Werkstoff umschlossen ist. Dabei ist es bevorzugt, dass der weitere Werkstoff vorteilhafte korrosionstechnische und/oder vorteilhaft elektrisch leitende Eigenschaften aufweist. Durch die Verwendung eines weiteren Werkstoffs können die Eigenschaften der Kontaktbuchse und der Kontaktbolzen anwendungsspezifisch angepasst werden.

Gemäß einem Ausführungsbeispiel wird vorgeschlagen, dass der Kontaktbolzen und das Anschlussteil mittels zumindest einer Schweißnaht, insbesondere mittels einer Ultraschallschweißnaht oder mittels einer Widerstandsschweißnaht, stoffschlüssig miteinander verbunden sind.

Gemäß einem Ausführungsbeispiel wird vorgeschlagen, dass das Gehäuseteil mittels zumindest einer Schweißnaht, insbesondere mittels einer Ultraschallschweißnaht, mittels einer Laserstrahlschweißnaht oder mittels einer Rührreibpunktschweißnaht, stoffschlüssig mit dem Batteriemodul verbunden ist.

Gemäß einem Ausführungsbeispiel wird vorgeschlagen, dass der Kontaktbolzen und die Kontaktbuchse werkzeuglos miteinander verbindbar sind. Dies führt einerseits bei der Montage zu einer geringeren Montagezeit und andererseits können die Kosten für entsprechendes Werkzeug vermieden werden.

Gemäß einem Ausführungsbeispiel wird vorgeschlagen, dass das Anschlussteil eine oder mehreren Materiallagen umfasst und/oder dass das Anschlussteil als Litzenleiter oder als BusBar-Leiter gebildet ist. Bei der einlagigen oder mehrlagigen Ausgestaltung des Anschlussteils ist es bevorzugt, dass das Anschlussteil oder die Lagen des Anschlussteils aus einem Vollmaterial gebildet ist, dessen Grundwerkstoff elektrisch leitfähig ist. Falls das Anschlussteil mehrere Materiallagen aufweist, ist es bevorzugt, dass diese derart zueinander angeordnet sind, dass Ausgleichseffekte zu den Kontaktpunkten zwischen Anschlussteil und Kontaktbolzen erzielt werden. Falls das Anschlussteil als Litzenleiter gebildet ist, ist es bevorzugt, dass die Litzen des Litzenleiters derart zueinander angeordnet sind, dass ein Längenausgleich zu den Kontaktpunkten zwischen Anschlussteil und Kontaktbolzen gewährleistet werden kann. Unter mehrlagig im Sinne der Anmeldung sind sowohl ein Laminat als auch ein Geflecht zu verstehen. Auch in einem Geflecht liegen die einzelnen Litzen übereinander und sind mehrlagig.

Nachfolgend wird der Gegenstand anhand einer Ausführungsbeispiele zeigenden Zeichnung näher erläutert. In der Zeichnung zeigen:
- Fig. 1: ein Ausführungsbeispiel eines Modulverbinders mit nicht miteinander verbundenem Anschluss- und Gehäuseteil in einer schematischen Darstellung,
- Fig. 2: das in Fig. 1 gezeigte Ausführungsbeispiel des Modulverbinders mit miteinander verbundenem Anschluss- und Gehäuseteil in einer schematischen Darstellung,
- Fig. 3: ein weiteres Ausführungsbeispiel eines Modulverbinders mit nicht miteinander verbundenem Anschluss- und Gehäuseteil in einer schematischen Darstellung,
- Fig. 4: das in Fig. 3 gezeigte Ausführungsbeispiel des Modulverbinders mit miteinander verbundenem Anschluss- und Gehäuseteil in einer schematischen Darstellung,
- Fig. 5: ein weiteres Ausführungsbeispiel eines Modulverbinders mit nicht miteinander verbundenem Anschluss- und Gehäuseteil in einer schematischen Darstellung,
- Fig. 6: eine schematische Darstellung eines Ausführungsbeispiels eines BusBar-Leiters und
- Fig. 7: eine schematische Draufsicht einer Kontaktbuchse vor dem Umformprozess.

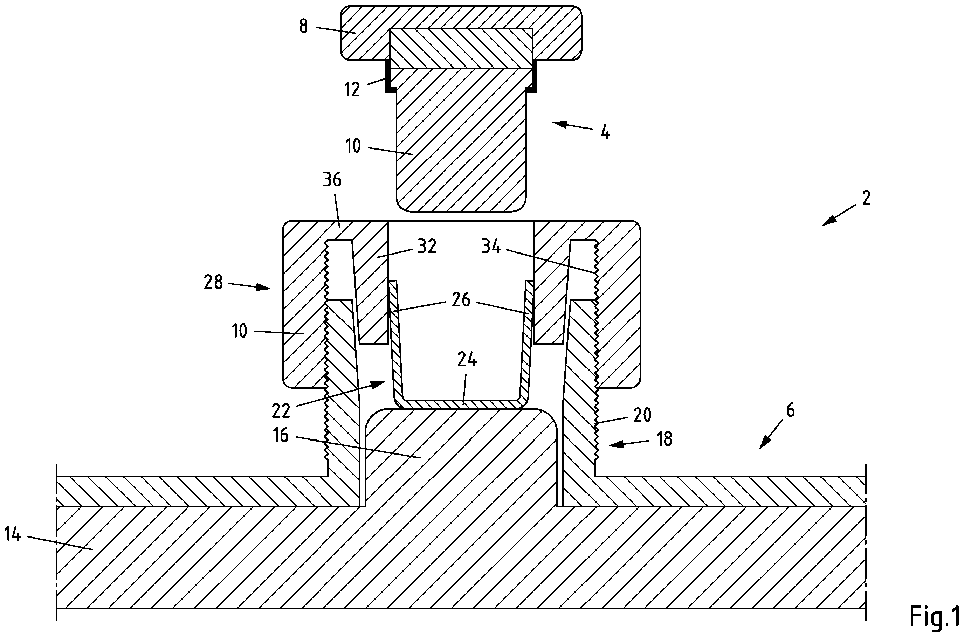

In Fig. 1 ist ein Ausführungsbeispiel eines Modulverbinders 2 mit nicht miteinander verbundenem Anschlussteil 4 und Gehäuseteil 6 in einer schematischen Darstellung gezeigt.

Das Anschlussteil 4 weist einen länglichen BusBar-Leiter 8 auf, welcher stoffschlüssig, insbesondere mittels einer Ultraschallschweißnaht, mit einem Kontaktbolzen 10 verbunden ist. Der Kontaktbolzen 10 ist zylindrisch ausgestaltet und weist an seiner dem Busbar-Leiter 8 zugewandten Seite einen umlaufenden, flanschartigen Vorsprung 12 auf. Das Anschlussteil 4 ist nicht mit dem Gehäuseteil 6 verbunden.

Das Gehäuseteil 6 nimmt ein Modul 14, insbesondere eine Batteriezelle, auf, wobei das Modul 14 eine im Wesentlichen zylindrische Ausbuchtung 16 aufweist. Die zylindrische Ausbuchtung 16 wird von einem zylinderförmigen, schaftartigen Vorsprung 18 umgeben. Der Vorsprung 18 weist an zumindest einem Teil seiner äußeren Mantelfläche ein Außengewinde 20 auf. Es ist erkennbar, dass die Wandstärke des Vorsprungs 18 in Richtung des Moduls 14 abnimmt, indem die innere Mantelfläche des Vorsprungs 18 keilartig zuläuft. Mit der Stirnseite der Ausbuchtung 16 ist eine Kontaktbuchse 22 stoffschlüssig verbunden. Die Kontaktbuchse 22 weist einen Kontaktteller 24 und von dem Kontaktteller 24 zylindrisch in einem Winkel von 70° bis 90° umgestellte Kontaktlamellen 26 auf.

Mit dem Vorsprung 18 ist ein Verbindungsteil 28 verbunden. Das Verbindungsteil 28 ist mutterförmig ausgestaltet und weist einen außenseitigen, zylinderförmigen Bereich 30 und einen innenseitigen, zylinderförmigen Bereich 32 auf. Mittels eines an der inneren Mantelfläche des außenseitigen Bereichs 30 angeordneten Gewindes 34 ist das Verbindungsteil 28 mit dem Vorsprung 18 verschraubt. Die beiden zylinderförmigen Bereiche 30 und 32 sind mittels eines an einer Stirnseite des Verbindungsteils angeordneten, ringförmigen Stegs 36 miteinander verbunden. Von dem Steg 36 startend verjüngt sich die Wandstärke des innenseitigen, zylinderförmigen Bereichs 32. Durch die Verschraubung des Verbindungsteils 28 mit dem Vorsprung 18 kann ein unbeabsichtigtes Berühren der Kontaktbuchse 22 vermieden werden, wodurch die Montagesicherheit erhöht werden kann.

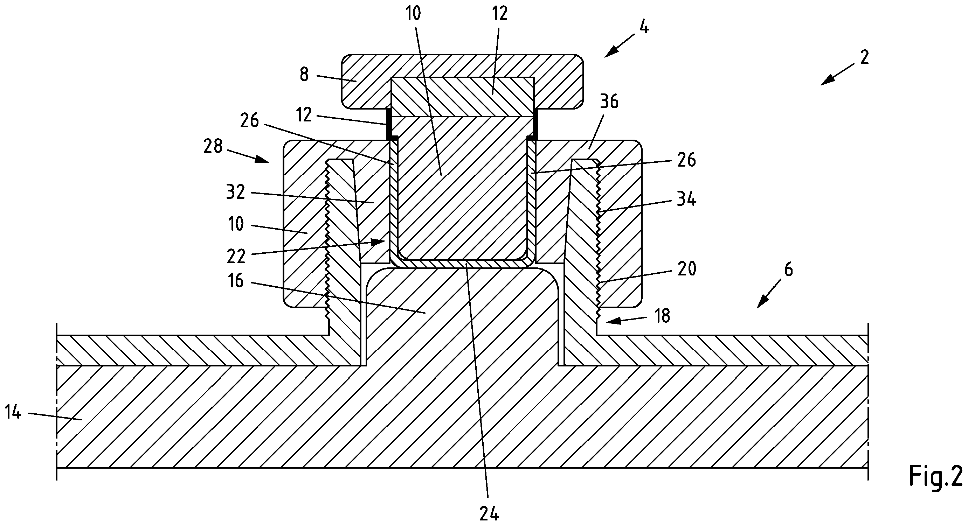

In Fig. 2 ist das in Fig. 1 gezeigte Ausführungsbeispiel des Modulverbinders 2 mit miteinander verbundenem Anschlussteil 4 und Gehäuseteil 6 in einer schematischen Darstellung gezeigt. Es ist bevorzugt, dass das Anschlussteil 4 mittels des Kontaktbolzens 10 zunächst in die Kontaktbuchse 22 des Gehäuseteils 6 gesteckt wird. Mittels einer Verschraubung des Verbindungsteils 28 kann nun durch die keilartige Ausgestaltung des innenseitigen, zylinderförmigen Bereichs 32 und der inneren Mantelfläche des Vorsprungs 18 der Raum in Querrichtung zu den Kontaktlamellen 26 verringert werden, wodurch die Kontaktkräfte, die von dem Verbindungsteil 28 auf die Kontaktlamellen 26 der Kontaktbuchse 22 ausgeübt werden, erhöht werden. Hierdurch legen sich die Kontaktlamellen 26 vollflächig und im Wesentlichen vollumschließend um den Kontaktbolzen 10 zur Herstellung einer form- und kraftschlüssigen Verbindung zwischen Kontaktbuchse 22 und Kontaktbolzen 10 an. Mittels der Verschraubung kann eine prozesssichere Verbindung zwischen Anschlussteil 4 und Gehäuseteil 6 mittels des Verbindungsteils 28 sichergestellt werden.

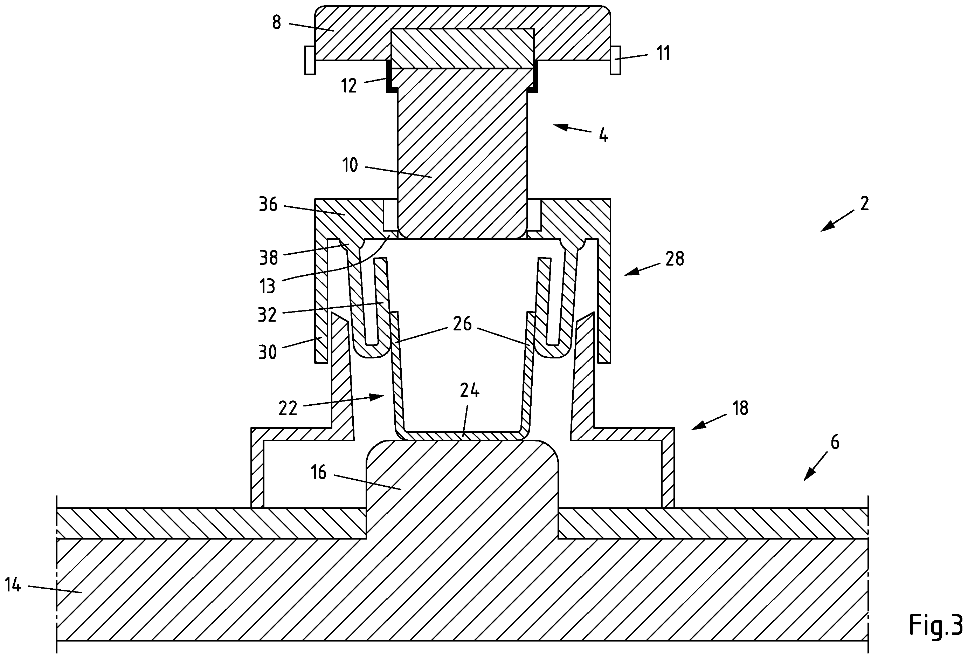

In Fig. 3 ist ein weiteres Ausführungsbeispiel eines Modulverbinders 2 mit nicht miteinander verbundenem Anschlussteil 4 und Gehäuseteil 6 in einer schematischen Darstellung gezeigt. Das Anschlussteil 4 ist im Wesentlichen identisch zu dem in den Fig. 1 und 2 gezeigten Anschlussteil 4 ausgestaltet. Es weist zusätzlich ein Verbindungsmittel 11 auf, mit welchem das Anschlussteil 4 mit dem Verbindungsteil 28 verrastbar ist. Der Vorsprung 18 des Gehäuseteils 6 ist im Unterschied zu dem in den Fig. 1 und 2 Vorsprung 18 im Querschnitt stufenartig ausgebildet. Ebenfalls ist die Stirnseite des Vorsprungs 18 nach Innen abgeschrägt, wodurch die Verbindung des Verbindungsteils 28 mit dem Vorsprung 18 vereinfacht wird.

Wesentlich unterscheidet sich die Ausgestaltung des Verbindungsteils 28. Das Verbindungsteil 28 weist ebenfalls einen außenseitigen, zylinderförmigen Bereich 30 und einen innenseitigen, zylinderförmigen Bereich 32 auf, welche mittels eines ringförmigen Stegs 36 miteinander verbunden sind. Allerdings ist der innenseitige, zylinderförmige Bereich 32 als federndes Element 32 in Form eines Federkranzes gebildet. Das federnde Element 32 weist einen in Wesentlichen U-förmigen Querschnitt auf. An der Innenseite des Übergangs zwischen federndem Element 32 und Steg 36 ist weiterhin ein umlaufender, ringförmiger Flansch 38 gebildet.

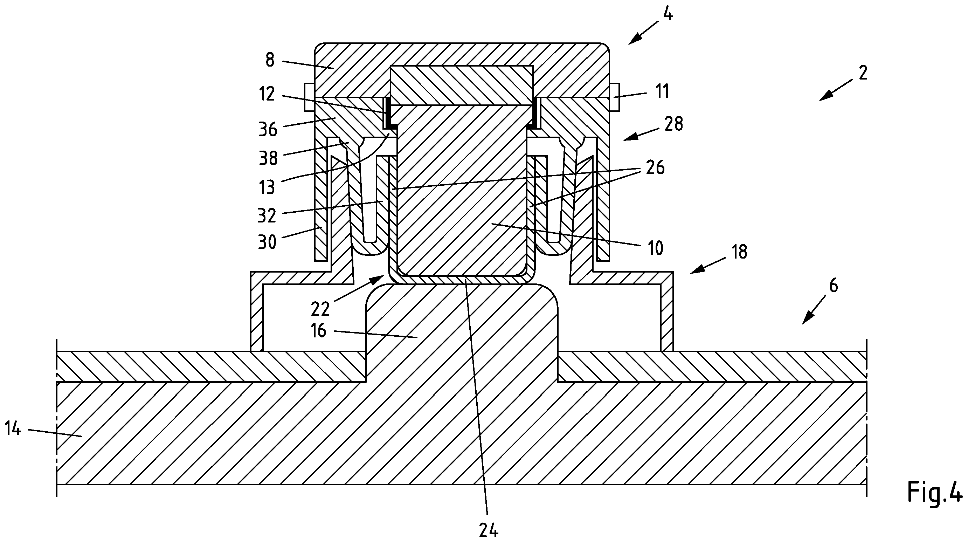

Das Verbindungsteil 28 ist auf dem Vorsprung 18 aufgesteckt, wodurch ein unbeabsichtigtes Berühren der Kontaktbuchse 22 verhindert werden kann. Beim Stecken des Anschlussteils 4 in das Gehäuseteil 6 verrastet das Anschlussteil 4 mittels des Verbindungsmittels 11 mit dem Verbindungsteil 28 und der Vorsprung 12 kommt auf einem umlaufenden Kragen 13 des Verbindungsteils 28 zum Anliegen, sodass das Anschlussteil 4 und das Verbindungsteil 28 weiter als Einheit in das Gehäuseteil 6 gesteckt werden. Mit zunehmendem Einstecken des Anschlussteils 4 und des Verbindungsteils 28 in das Gehäuseteil 6 werden durch die in Richtung des Gehäuseteils 6 zunehmende Wandstärke des Vorsprungs 18 zunehmende Kontaktkräfte auf die Kontaktlamellen 26 der Kontaktbuchse 22 ausgeübt, indem das federnde Element 32 gegen die Kontaktlamellen gedrückt wird. Hierdurch legen sich die Kontaktlamellen 26 vollflächig und im Wesentlichen vollumschließend um den Kontaktbolzen 10 zur Herstellung einer form- und kraftschlüssigen Verbindung zwischen Kontaktbuchse 22 und Kontaktbolzen 10 an. Falls eine zuvor definierte Steckposition erreicht ist, verrastet die Einheit aus Anschlussteil 4 und Verbindungsteil 28 mit dem Gehäuseteil 6. Ein solcher Zustand ist in Fig. 4 dargestellt.

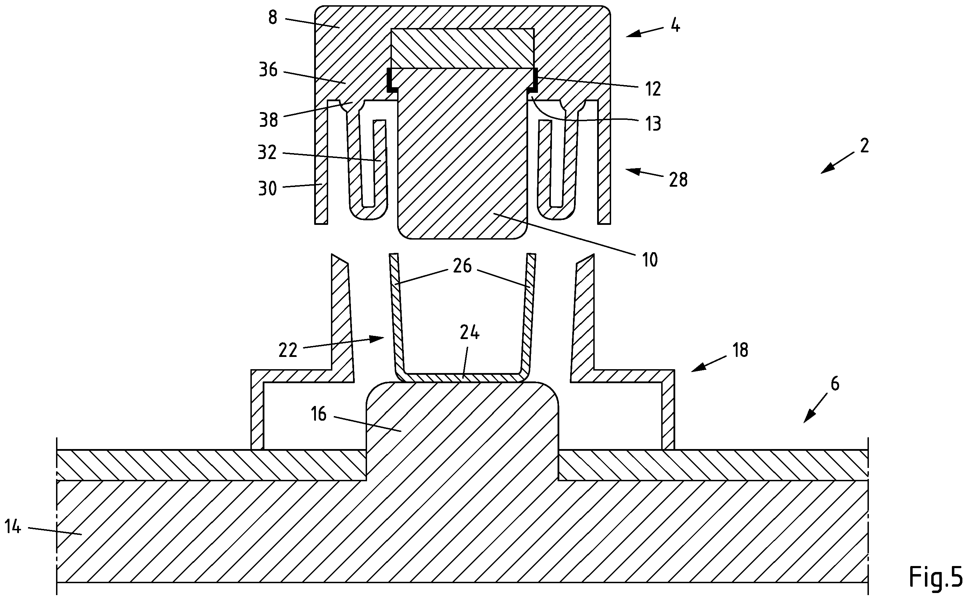

In Fig. 5 ist ein weiteres Ausführungsbeispiel eines Modulverbinders 2 mit nicht miteinander verbundenem Anschlussteil 4 und Gehäuseteil 6 in einer schematischen Darstellung gezeigt. Das in Fig. 5 gezeigte Ausführungsbeispiel unterscheidet sich dadurch von dem in den Fig. 3 und 4 gezeigten Ausführungsbeispielen, dass Verbindungsteil 28 und Anschlussteil 4 einstückig gebildet sind. Verbindungsteil 28 und Anschlussteil 4 können beispielsweise bereits aus demselben Material gefertigt werden oder werden während des Fertigungsprozesses, beispielsweise stoffschlüssig, miteinander verbunden.

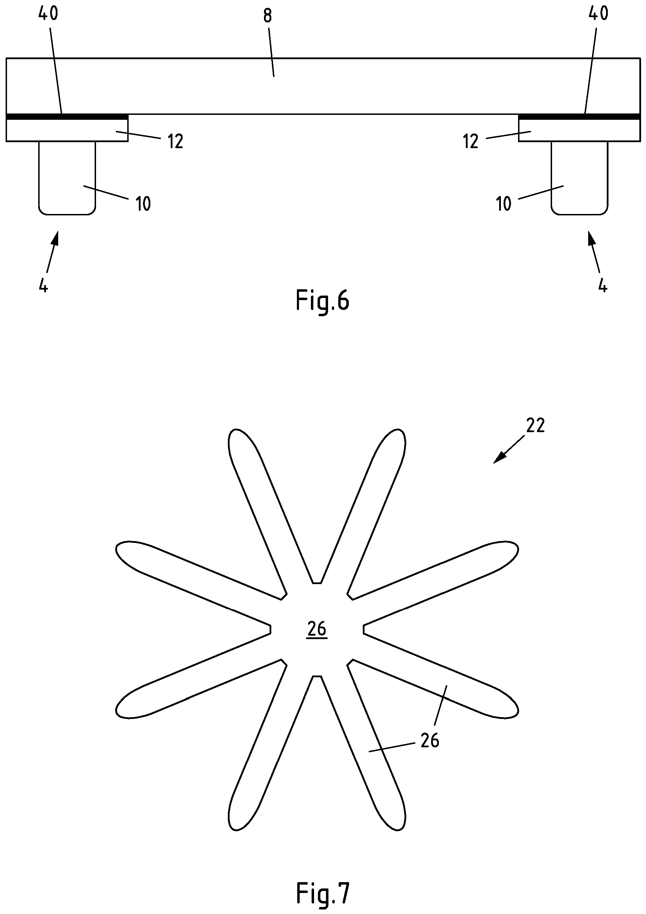

Fig. 6 zeigt eine schematische Darstellung eines Ausführungsbeispiels eines Anschlussteils 4 aufweisend einen BusBar-Leiter 8, wobei der BusBar-Leiter 8 zwei Kontaktbolzen 10 aufweist, die mittels einer Schweißnaht 40, insbesondere mittels einer Ultraschallschweißnaht, stoffschlüssig mit dem BusBar-Leiter 8 verbunden sind. Es ist erkennbar, dass der BusBar-Leiter 8 mehrschichtig ausgestaltet ist.

Fig. 7 zeigt eine schematische Draufsicht einer Kontaktbuchse 22 vor dem Umformprozess. Es ist erkennbar, dass sich die Kontaktlamellen 26 im Wesentlichen radial von dem Kontaktteller 24 erstrecken. Die in Fig. 7 dargestellte Kontaktbuchse 22 kann beispielsweise mittels eines Stanzprozesses aus einem Blech oder aus einem Blechband hergestellt werden. Nach dem Stanzprozess werden die Kontaktlamellen 26 mittels eines Umformprozesses in einem Winkel von 70° bis 90°, insbesondere in einem Winkel von im Wesentlichen 80°, zum Kontaktteller umgestellt.

Nach dem Stanz- und Umformprozess kann der Kontaktteller 24 mittels eines Fügeprozesses, insbesondere mittels eines Schweißprozesses, mit dem Modul 14 verbunden werden.

## Patentansprüche

1. Modulverbinder, insbesondere Batteriezellenverbinder,
- zur Verbindung von mindestens einem Anschlussteil (4) und mindestens einem Gehäuseteil (6),
- aufweisend zumindest eine dem Gehäuseteil (6) zugeordnete Kontaktbuchse (22) und zumindest einen an dem Anschlussteil (4) angeordneten Kontaktbolzen (10),
- wobei das Anschlussteil (4) und das Gehäuseteil (6) zur Anbindung und/oder zur Aufnahme zumindest eines Moduls (14), insbesondere zumindest eines Batteriemoduls, gebildet sind,
- wobei die Kontaktbuchse (22) im Wesentlichen ringförmig angeordnete Kontaktlamellen (26) und einen die Kontaktbuchse (22) stirnseitig begrenzenden Kontaktteller (24) aufweist und
- wobei das Anschlussteil (4) und Gehäuseteil (6) mittels einer Steckverbindung zwischen Kontaktbolzen (10) und Kontaktbuchse (22) form- und kraftschlüssig miteinander verbindbar sind, indem Kontaktkräfte auf die äußere Mantelfläche der Kontaktlamellen (26) wirken und die Kontaktkräfte die Kontaktlamellen (26) gegen den Kontaktbolzen (10) drücken
**dadurch gekennzeichnet,**
- **dass** das Gehäuseteil (6) zumindest einen, die Kontaktbuchse (22) im Wesentlichen zylinderförmig umgebenden, Vorsprung (18) aufweist,
- **dass** der Modulverbinder ein Verbindungsteil (28) umfasst, welches einen außenseitigen, zylinderförmigen Bereich (30) und einen innenseitigen, zylinderförmigen Bereich (32) aufweist, und welches mit dem Vorsprung (18) verbindbar ist, und
- **dass** sich die Wandstärke des innenseitigen, zylinderförmigen Bereichs (32) in Richtung des Gehäuseteils (6) verjüngt und/oder sich die Wandstärke des Vorsprungs (18) in Richtung des Verbindungsteils (28) verjüngt.

2. Modulverbinder nach Anspruch 1,
**dadurch gekennzeichnet,**
- **dass** das Verbindungsteil (28) einstückig mit dem Anschlussteil (4) gebildet ist oder
- **dass** das Verbindungsteil (28) mittels einer Rastverbindung mit dem Anschlussteil (4) verbindbar ist.

3. Modulverbinder nach einem der Ansprüche 1 bis 2,
**dadurch gekennzeichnet,**
- **dass** der Vorsprung (18) an seiner Mantelfläche ein Gewinde (32) aufweist und
- **dass** das Verbindungsteil (28) mit dem Vorsprung (18) verschraubbar ist.

4. Modulverbinder nach Anspruch 3,
**dadurch gekennzeichnet,**
- **dass** eine zunehmende Verschraubung des Verbindungsteils (28) mit dem Vorsprung (18) zu einer zunehmenden Raumverengung in Querrichtung zu den Kontaktlamellen (26) der Kontaktbuchse (22) innerhalb des Vorsprungs (18) führt und
- **dass** mit zunehmender Verschraubung zunehmende Kontaktkräfte auf die äußere Mantelfläche der Kontaktlamellen (26) wirken.

5. Modulverbinder nach einem der Ansprüche 1 bis 4,
**dadurch gekennzeichnet,**
- **dass** das Verbindungsteil (28) mittels einer Rastverbindung mit dem Vorsprung (18) verbindbar ist,
- **dass** der innenseitige, zylinderförmige Bereich des Verbindungsteils (28) zur Herstellung der Rastverbindung als federndes Elements (32) gebildet ist und
- **dass** das federnde Element (32) bei Herstellung der Rastverbindung Kontaktkräfte auf die äußere Mantelfläche der Kontaktlamellen (26) ausübt.

6. Modulverbinder nach einem der Ansprüche 1 bis 5,
**dadurch gekennzeichnet,**
- **dass** der Kontaktbolzen (10) und/oder die Kontaktbuchse (22) einen elektrisch leitenden Grundwerkstoff, insbesondere Kupfer, umfasst und
- **dass** der Grundwerkstoff zumindest teilweise von einem weiteren Werkstoff umschlossen ist.

7. Modulverbinder nach einem der Ansprüche 1 bis 8,
**dadurch gekennzeichnet,**
- **dass** der Kontaktbolzen (10) und das Anschlussteil (4) mittels zumindest einer Schweißnaht, insbesondere mittels einer Ultraschallschweißnaht oder mittels einer Widerstandsschweißnaht, stoffschlüssig miteinander verbunden sind.

8. Modulverbinder nach einem der Ansprüche 1 bis 7,
**dadurch gekennzeichnet,**
- **dass** das Gehäuseteil (6) mittels zumindest einer Schweißnaht, insbesondere mittels einer Ultraschallschweißnaht, mittels einer Laserstrahlschweißnaht oder mittels einer Rührreibpunktschweißnaht, stoffschlüssig mit dem Batteriemodul verbunden ist.

9. Modulverbinder nach einem der Ansprüche 1 bis 8,
**dadurch gekennzeichnet,**
- **dass** der Kontaktbolzen (10) und die Kontaktbuchse (22) werkzeuglos miteinander verbindbar sind.

10. Modulverbinder nach einem der Ansprüche 1 bis 9,
**dadurch gekennzeichnet,**
- **dass** das Anschlussteil (4) eine oder mehreren Materiallagen umfasst und/oder
- **dass** das Anschlussteil (4) als Litzenleiter oder als BusBar-Leiter gebildet ist.

11. Verfahren zur Verbindung von Modulen, insbesondere zur Verbindung eines Anschlussteils und eines Gehäuseteils, mittels einer Vorrichtung nach einem der Ansprüche 1 bis 10, umfassend die Schritte:
- Verbinden einer Kontaktbuchse mit dem Gehäuseteil und Verbinden eines Kontaktbolzens mit dem Anschlussteil,
- Herstellen einer form- und kraftschlüssigen Steckverbindung zwischen Kontaktbuchse und Kontaktbolzen, indem Kontaktkräfte auf die äußere Mantelfläche der Kontaktbuchse ausgeübt werden und gegen den Kontaktbolzen drücken.

## Claims

1. Module connector, in particular battery cell connector,
- for connecting at least one connection part (4) and at least one housing part (6),
- having at least one contact socket (22) associated with the housing part (6) and at least one contact bolt (10) arranged on the connection part (4),
- wherein the connection part (4) and the housing part (6) being formed for the attachment and/or for the accommodation of at least one module (14), in particular at least one battery module,
- wherein the contact socket (22) having contact lamellae (26) arranged essentially in the form of a ring and a contact plate (24) bounding the contact socket (22) on the end face, and
- wherein the connection part (4) and the housing part (6) can be connected to one another in a form-fitting and force-fitting manner by means of a plug connection between the contact bolt (10) and the contact socket (22), in that contact forces act on the outer lateral surface of the contact lamellae (26) and the contact forces press the contact lamellae (26) against the contact bolt (10)
**characterized in**
- **that** the housing part (6) has at least one projection (18) surrounding the contact socket (22) in an essentially cylindrical manner,
- **that** the module connector has a connecting part (28) having an outer cylindrical region (30) and an inner cylindrical region (32) and which can be connected to the projection (18), and
- **that** the wall thickness of the inner cylindrical region (32) tapers in the direction of the housing part (6) and/or the wall thickness of the projection (18) tapers in the direction of the connecting part (28).

2. Module connector according to claim 1,
**characterized in**
- **that** the connecting part (28) is formed integrally with the connection part (4) or
- **that** the connecting part (28) can be connected to the connection part (4) by means of a latching connection.

3. Module connector according to one of claims 1 to 2,
**characterized in**
- **that** the projection (18) has a thread (32) on its outer surface and
- **that** the connecting part (28) can be screwed to the projection (18).

4. Module connector according to claim 3,
**characterized in**
- **that** an increasing screw connection of the connecting part (28) to the projection (18) leads to an increasing constriction of the space in the transverse direction of the contact lamellae (26) of the contact socket (22) within the projection (18), and
- **that** increasing contact forces act on the outer lateral surface of the contact lamellae (26) as the screw connection increases.

5. Module connector according to one of claims 1 to 4,
**characterized in**
- **that** the connecting part (28) can be connected to the projection (18) by means of a latching connection,
- **that** the inner cylindrical region of the connecting part (28) is formed as a resilient element (32) for producing the latching connection, and
- **that** the resilient element (32) exerts contact forces on the outer lateral surface of the contact lamellae (26) when the latching connection is made.

6. Module connector according to one of the claims 1 to 5,
**characterized in**
- **that** the contact bolt (10) and/or the contact socket (22) comprise an electrically conductive base material, in particular copper, and
- **that** the base material is at least partially surrounded by a further material.

7. Module connector according to one of claims 1 to 6,
**characterized in**
- **that** the contact bolt (10) and the connection part (4) are connected to one another in a materially integral manner by means of at least one weld seam, in particular by means of an ultrasonic weld seam or by means of a resistance weld seam.

8. Module connector according to one of claims 1 to 7,
**characterized in**
- **that** the housing part (6) is connected in a materially integral manner to the battery module by means of at least one weld seam, in particular by means of an ultrasonic weld seam, by means of a laser beam weld seam or by means of a friction stir spot weld.

9. Module connector according to one of claims 1 to 8,
**characterized in**
- **that** the contact bolt (10) and the contact socket (22) can be connected to one another without the use of tools.

10. Module connector according to one of claims 1 to 9,
**characterized in**
- **that** the connection part (4) comprises one or more material layers and/or
- **that** the connection part (4) is formed as a stranded conductor or as a busbar conductor.

11. Method for connecting modules, in particular for connecting a connection part and a housing part, by means of a device according to one of claims 1 to 10, comprising the steps of:
- connecting a contact socket to the housing part and connecting a contact bolt to the connection part,
- producing a form-fitting and force-fitting plug connection between the contact socket and the contact bolt by exerting contact forces on the outer lateral surface of the contact socket and pressing against the contact bolt.

## Revendications

1. Connecteur de module, en particulier connecteur de cellule de batterie,
- pour connecter au moins une pièce de raccordement (4) et au moins une pièce de boîtier (6),
- ayant au moins une douille de contact (22) associée à la pièce de boîtier (6) et au moins un boulon de contact (10) disposé sur la pièce de raccordement (4),
- où la pièce de raccordement (4) et la pièce de boîtier (6) sont formées pour un raccordement et/ou pour une réception d'au moins un module (14), en particulier d'au moins un module de batterie,
- où la douille de contact (22) a des lamelles de contact (26) disposées essentiellement en forme d'anneau et un plateau de contact (24) délimitant frontalement la douille de contact (22), et
- où la pièce de raccordement (4) et la pièce de boîtier (6) sont reliables l'une à l'autre par complémentarité de forme et par liaison de force au moyen d'une liaison par enfichage entre le boulon de contact (10) et la douille de contact (22), où des forces de contact agissent sur la surface d'enveloppe extérieure des lamelles de contact (26) et les forces de contact pressant les lamelles de contact (26) contre le boulon de contact (10)
**caractérisé en ce**
- **que** la pièce de boîtier (6) a au moins une saillie (18) entourant la douille de contact (22) de manière essentiellement cylindrique,
- **que** le connecteur de module a une pièce de raccordement (28), qui a une zone cylindrique extérieure (30) et une zone cylindrique intérieure (32) et qui peut être reliée à la saillie (18), et
- **que** l'épaisseur de paroi de la zone cylindrique intérieure (32) se rétrécit en direction de la pièce de boîtier (6) et/ou que l'épaisseur de paroi de la saillie (18) se rétrécit en direction de la pièce de raccordement (28).

2. Connecteur de module selon la revendication 1,
**caractérisé en ce**
- **que** la pièce de raccordement (28) est formée d'une seule pièce avec la pièce de raccordement (4) ou
- **que** la pièce de raccordement (28) est reliable à la pièce de raccordement (4) au moyen d'une liaison par encliquetage.

3. Connecteur de module selon l'une des revendications 1 à 2,
**caractérisé en ce**
- **que** la saillie (18) a un filetage (32) sur sa surface d'enveloppe et
- **que** la pièce de raccordement (28) est vissable avec la saillie (18).

4. Connecteur de module selon la revendication 3,
**caractérisé en ce**
- **qu'**un vissage croissant de la pièce de raccordement (28) avec la saillie (18) mène à un rétrécissement croissant de l'espace dans la direction transversale par rapport aux lamelles de contact (26) de la douille de contact (22) à l'intérieur de la saillie (18) et
- **que** des forces de contact croissantes agissent sur la surface d'enveloppe extérieure des lamelles de contact (26) avec un vissage croissant.

5. Connecteur de module selon l'une des revendications 1 à 4,
**caractérisé en ce**
- **que** la pièce de raccordement (28) est reliable à la saillie (18) au moyen d'une liaison par encliquetage,
- **que** la zone cylindrique intérieure de la pièce de raccordement (28) est formée comme un élément élastique (32) pour réaliser la liaison par encliquetage, et
- **que** l'élément élastique (32) exerce des forces de contact sur la surface d'enveloppe extérieure des lamelles de contact (26) lors de la réalisation de la liaison par encliquetage.

6. Connecteur de module selon l'une des revendications 1 à 5,
**caractérisé en ce**
- **que** le boulon de contact (10) et/ou la douille de contact (22) comprend un matériau de base conducteur d'électricité, en particulier du cuivre, et
- **que** le matériau de base est au moins partiellement entouré d'un autre matériau.

7. Connecteur de module selon l'une des revendications 1 à 8,
**caractérisé en ce**
- **que** le boulon de contact (10) et la pièce de raccordement (4) sont reliés entre eux par liaison de matière au moyen d'au moins un cordon de soudure, en particulier au moyen d'un cordon de soudure par ultrasons ou au moyen d'un cordon de soudure par résistance.

8. Connecteur de module selon l'une des revendications 1 à 7,
**caractérisé en ce**
- **que** la pièce de boîtier (6) est reliée au module de batterie par liaison de matière au moyen d'au moins un cordon de soudure, en particulier au moyen d'un cordon de soudure par ultrasons, au moyen d'un cordon de soudure par faisceau laser ou au moyen d'un cordon de soudure par points de friction agités.

9. Connecteur de module selon l'une des revendications 1 à 8,
**caractérisé en ce**
- **que** le boulon de contact (10) et la douille de contact (22) sont reliables entre eux sans outil.

10. Connecteur de module selon l'une des revendications 1 à 9,
**caractérisé en ce**
- **que** la pièce de raccordement (4) comprend une ou plusieurs couches de matériau et/ou
- **que** la pièce de raccordement (4) est formée comme conducteur toronné ou comme conducteur BusBar.

11. Procédé de connexion de modules, en particulier pour connecter une pièce de raccordement et une pièce de boîtier au moyen d'un dispositif selon l'une des revendications 1 à 10, comprenant les étapes suivantes :
- connecter une douille de contact à la pièce de boîtier et connecter un boulon de contact à la pièce de raccordement,
- réaliser une liaison enfichable par complémentarité de forme et de force entre la douille de contact et le boulon de contact, où des forces de contact exercent sur la surface d'enveloppe extérieure de la douille de contact et pressent contre le boulon de contact.
